# EUROPÄISCHE PATENTSCHRIFT

(11) **EP 3 390 042 B1**
(45) Veröffentlichungstag und Bekanntmachung des Hinweises auf die Patenterteilung: **08.06.2022**
(21) Anmeldenummer: 16806203.2
(22) Anmeldetag: 12.12.2016
(51) Int. Cl.: B32B 17/10

(54) **VERFAHREN ZUR AUTOKLAVFREIEN LAMINATION EINER VERBUNDSCHEIBE**
METHOD FOR THE AUTOCLAVE-FREE LAMINATION OF A LAMINATED GLAZING
PROCÉDÉ DE LAMINAGE SANS AUTOCLAVE D'UN VITRAGE FEUILLETÉ

(30) Priorität: 14.12.2015 EP 15199718
(43) Veröffentlichungstag der Anmeldung: 24.10.2018
(73) Patentinhaber: SAINT-GOBAIN GLASS FRANCE, 92400 Courbevoie (FR)
(72) Erfinder: GIER, Stephan, 66359 Bous (DE); LÜCKE, Stefan, 52477 Alsdorf (DE); KLUCZEWSKI, Wojciech, 32-300 Olkusz (PL)
(74) Vertreter: Obermair, Christian Egbert
(86) Internationale Anmeldenummer: PCT/EP2016/080651
(87) Internationale Veröffentlichungsnummer: WO 2017/102656

(56) Entgegenhaltungen:
- EP-A2- 0 331 648
- DE-A1- 19 643 404
- DE-A1- 19 835 496
- US-A- 5 536 347
- US-A1- 2003 148 114
- US-A1- 2004 182 493
- US-A1- 2009 126 859

## Beschreibung

Die Erfindung betrifft ein Verfahren zur autoklavfreien Lamination einer Verbundscheibe sowie eine Vorrichtung zur Durchführung des erfindungsgemäßen Verfahrens.

Verbundscheiben finden vielfach Verwendung, beispielsweise als Fahrzeugscheiben wie Windschutzscheiben, Seitenscheiben, Heckscheiben oder Dachscheiben in Fahrzeugen zu Wasser, zu Lande oder in der Luft, aber auch als Architekturscheiben, als Brandschutzscheiben, als Sicherheitsverglasung oder in Möbeln sowie beweglichen oder festmontierten Einrichtungsgegenständen.

Verbundscheiben umfassen typischerweise zwei Scheiben, beispielsweise eine Substratscheibe und eine Deckscheibe, die über eine Zwischenschicht, beispielsweise aus einer thermoplastischen Polyvinylbutyral (PVB)-Folie in einem Laminationsverfahren unter Einwirkung von Hitze und Druck miteinander verbunden werden.

Industriell übliche Laminationsverfahren umfassen dabei in der Regel einen Entlüftungsprozess kombiniert mit einem Autoklavprozess, wie beispielsweise in DE 19903171 A1 offenbart ist. Autoklavprozesse sind in der Regel sehr zeitaufwendig und energieintensiv.

Autoklavfreie Laminationsverfahren haben oftmals den Nachteil, dass die Scheiben nur unzureichend miteinander verbunden werden und beispielsweise im Fahrzeugbereich üblichen Anforderungen nicht genügen. Des Weiteren zeigen autoklavfrei laminierte Verbundscheiben oftmals Lufteinschlüsse und Trübungen im Randbereich der Verbundscheibe. Deshalb werden in autoklavfreien Laminationsverfahren oftmals spezielle Zwischenschichten verwendet.

Die DE 196 43 404 A1 offenbart ein autoklavfreies Verfahren, bei dem eine Verbundscheibe mit einer speziellen weichmacherhaltigen, teilacetalisierten Polyvinylalkohol-Folie mit einem sehr niedrigen Wassergehalt von weniger als 0,35 Gew.-%, bezogen auf die Masse der Folie und einem wirksamen Gehalt eines die Haftung erhöhenden silcium-organofunktionellen Silans hergestellt wird. Das autoklavfreie Verfahren umfasst ein einstufiges Vakuumverfahren, bei dem die Scheibe auf Temperaturen von 130°C erhitzt werden.

Die US 2009/0126859 A1 offenbart ein autoklavfreies Verfahren, bei dem eine Verbundscheibe mit einer speziellen lonomer-Folie hergestellt wird.

Die Aufgabe der vorliegenden Erfindung besteht nunmehr darin, ein verbessertes Verfahren zur autoklavfreien Lamination einer Verbundscheibe bereitzustellen, das es ermöglicht kostengünstig Verbundscheiben hoher Qualität herzustellen.

Die Aufgabe der vorliegenden Erfindung wird erfindungsgemäß durch ein Verfahren zur autoklavfreien Lamination einer Verbundscheibe gemäß dem unabhängigen Anspruch 1 gelöst. Bevorzugte Ausführungsformen gehen aus den Unteransprüchen hervor.

Das erfindungsgemäße Verfahren umfasst zumindest die folgenden Verfahrensschritte: Einen ersten Schritt (a) Herstellen einer Stapelfolge aus einer Substratscheibe, mindestens einer Zwischenschicht und einer Deckscheibe, die durch das erfindungsgemäße Verfahren zu einer Verbundscheibe laminiert wird.

Eine Schrittfolge zur Entlüftung der Stapelfolge, umfassend die Schritte:
(b1) Legen eines Vakuum-Ring oder eines Vakuum-Sack um die Stapelfolge,
(b2) Entlüften der Stapelfolge
   - bei einer Temperatur T von 0°C bis 30°C, bevorzugt bei Raumtemperatur oder Umgebungstemperatur,
   - für eine Zeitdauer t von größer oder gleich 8 Minuten (abgekürzt: min), bevorzugt eine Zeitdauer t von 10 min bis 60 min und besonders bevorzugt für eine Zeitdauer t von 10 min bis 20 min und
   - durch Anlegen eines absoluten Drucks p von kleiner oder gleich 0,3 bar, bevorzugt von kleiner oder gleich 0,2 bar und besonders bevorzugt von
   kleiner oder gleich 0,15 bar, an den Vakuum-Ring oder den Vakuum-Sack,
(b3) Erwärmen der Stapelfolge auf eine Temperatur T von 70°C bis 115°C, bevorzugt von 80°C bis 100°C, bei einem Druck p von kleiner oder gleich 0,3 bar, bevorzugt von kleiner oder gleich 0,2 bar und besonders bevorzugt von kleiner oder gleich 0,15 bar,
(b4) Entlüften der Stapelfolge
   - für eine Zeitdauer t von größer oder gleich 8 min, bevorzugt eine Zeitdauer t von 10 min bis 60 min und besonders bevorzugt für eine Zeitdauer t von 10 min bis 20 min,
   - durch Anlegen eines absoluten Drucks p von kleiner oder gleich 0,3 bar, bevorzugt von kleiner oder gleich 0,2 bar und besonders bevorzugt von kleiner oder gleich 0,15 bar, an den Vakuum-Ring oder den Vakuum-Sack,
(b5) Abkühlen der Stapelfolge auf eine Temperatur T von kleiner 70°C, und
(b6) Belüften und Entfernen des Vakuum-Rings oder des Vakuum-Sacks.

Sowie eine weitere Schrittfolge zum Zusammenpressen der Stapelfolge, umfassend die Schritte:
(c1) Erwärmen der Stapelfolge auf eine Temperatur T von 40°C bis 120°C, bevorzugt von 50°C bis 110°C,
(c2) Zusammenpressen der Stapelfolge in einer ersten Kalandereinheit zwischen mindestens zwei einander gegenüberliegenden Kalanderwalzen über die gesamte Breite b der Stapelfolge.

Einander gegenüberliegend bedeutet im Sinne der vorliegenden Erfindung, dass die zwei Kalanderwalzen bezüglich der Prozessebene, also der Position der Stapelfolge während des Zusammenpressens, einander gegenüberliegen. Das heißt, die eine Kalanderwalze ist auf der einen Seite der Prozessebene (beispielsweise unterhalb der Stapelfolge) angeordnet und die andere Kalanderwalze ist auf der anderen Seite der Prozessebene (beispielsweise oberhalb der Stapelfolge) angeordnet. Hinsichtlich einer orthogonalen Projektion durch die Prozessebene sind die Kalanderwalzen deckungsgleich zueinander angeordnet. Dies bedeutet, dass die jeweiligen Zentren der Kontaktflächen der oberhalb und der unterhalb der Stapelfolge angeordneten Kalanderwalzen mit der jeweiligen Oberfläche der Stapelfolge deckungsgleich zueinander angeordnet sind.

Die Breite b der Stapelfolge ist hier die Richtung senkrecht zur Transportrichtung der Stapelfolge durch die Kalanderwalzen.

In einer vorteilhaften Ausführungsform des erfindungsgemäßen Verfahrens wird die Stapelfolge im Verfahrensschritt (b3) innerhalb einer Dauer von 5 min bis 60 min, bevorzugt innerhalb von 10 min bis 35 min auf die Zieltemperatur erwärmt.

Eine vorteilhafte Ausführungsform des erfindungsgemäßen Verfahrens umfasst einen an den Verfahrensschritt c2) anschließenden Verfahrensschritt c3), wobei ein Randbereich der Stapelfolge in einer zweiten Kalandereinheit zwischen mindestens zwei weiteren einander gegenüberliegenden Kalanderwalzen zusammengepresst wird.

Die Breite r des Randbereich, der von den weiteren Kalanderwalzen zusammengepresst wird, beträgt vorteilhafterweise mindestens 1 cm, bevorzugt von 1 cm bis 50% der Breite b der Stapelfolge und besonders bevorzugt von 2 cm bis 30% der Breite b der Stapelfolge. Die Breite b der Stapelfolge ist hier definiert, als die Breite orthogonal zur Transportrichtung der Stapelfolge, das heißt orthogonal zur Transportrichtung durch die erfindungsgemäße Vorrichtung.

Dies hat den besonderen Vorteil, dass die Stapelfolge im Randbereich besonders gut miteinander verbunden wird. Insbesondere trapezförmige und/oder leicht gebogene Stapelfolgen können eine Biegeabweichung zwischen der Biegung der Substratscheibe und der Deckscheibe aufweisen. Diese Biegeabweichung ist im Randbereich besonders groß. Bei trapezförmigen Verbundscheiben ist die Biegeabweichung im Randbereich der Unterkante, also im Randbereich der längeren Grundseite der trapezförmigen Scheibe besonders groß und neigt zum Einschluss von Luftblasen oder Trübungen. Der zusätzliche Schritt c3) führt zu einer besonders innigen Verbindung zwischen Substratscheibe und Deckscheibe in diesem kritischen Bereich und daher zu einer besonders guten Scheibenqualität.

In einer alternative vorteilhafte Ausführungsform des erfindungsgemäßen Verfahrens wird im Verfahrensschritt c2) die Stapelfolge durch eine oder mehrere einander gegenüberliegende Kalanderwalzen der ersten Kalandereinheit des Randbereich mit einem höheren Anpressdruck zusammengepresst als im übrigen Bereich. Dazu ist es notwendig, dass die Kalanderwalzen einzeln oder in Gruppen mit unterschiedlichen Anpressdrücken beaufschlagt werden können. Auch dies führt zu einer besonders innigen Verbindung zwischen Substratscheibe und Deckscheibe in dem, wie oben erläutert, kritischen Randbereich der Verbundscheibe und daher zu einer besonders guten Scheibenqualität. Es versteht sich, dass diese Ausführungsform des erfindungsgemäßen Verfahrens auch von dem Verfahrensschritt c3) gefolgt werden kann und die Qualität der Verbundscheibe dadurch nochmals verbessert werden kann.

Als Substratscheibe und Deckscheibe sind im Grunde alle elektrisch isolierenden Substrate geeignet, die unter den Bedingungen der Herstellung und der Verwendung der erfindungsgemäßen Verbundscheibe thermisch und chemisch stabil sowie dimensionsstabil sind.

Die Substratscheibe und/oder die Deckscheibe enthalten bevorzugt Glas, besonders bevorzugt Flachglas, ganz besonders bevorzugt Floatglas und insbesondere Quarzglas, Borosilikatglas, Kalk-Natron-Glas, oder besteht daraus. Alternative Substratscheiben und/oder Deckscheiben enthalten bevorzugt klare Kunststoffe, besonders bevorzugt starre klare Kunststoffe und insbesondere Polyethylen, Polypropylen, Polycarbonat, Polymethylmethacrylat, Polystyrol, Polyamid, Polyester, Polyvinylchlorid und/oder Gemische davon, oder bestehen daraus. Es versteht sich, dass auch eine der Scheiben Glas und die andere Scheibe Kunststoff enthalten oder daraus bestehen kann. Das Substrat und/oder die Deckscheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehr-relevanten Sichtfeld des Fahrers liegen, beispielsweise für Dachscheiben, kann die Transmission aber auch viel geringer sein, beispielsweise größer als 5 %.

Die Dicke von Substrat und/oder Deckscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Das Substrat und gegebenenfalls die Deckscheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Substrate und/oder Deckscheiben werden durch mindestens eine Zwischenschicht miteinander verbunden. Die Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und / oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmethacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten.

Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,76 mm. Das heißt die Zwischenschicht kann jeweils aus einer oder aus mehreren Folien aufgebaut sein. Bevorzugt sind dabei mindestens drei übereinander angeordnete Folien, insbesondere Polvyinybutyral-Folien, mit alternierender unterschiedlicher Plastizität oder Elastizität, wie sie beispielsweise aus der EP 0763420 A1 oder der EP 0844075 A1 bekannt sind.

Die Zwischenschichten können bevorzugt thermoplastisch sein und nach der Lamination das Substrat, die Deckscheibe und eventuelle weitere Zwischenschichten miteinander verkleben.

Das erfindungsgemäße Verfahren ist besonders geeignet Zwischenschichten aus einer oder mehreren Polyvinylbutyral-Folien zu verarbeiten. Die Oberfläche der Polyvinylbutyral-Folie kann dabei geprägt sein und eine beliebige Rauigkeit aufweisen. Besonders bevorzugt sind Polyvinylbutyral-Folien mit einer Rauigkeit R_{z} von 15 µm bis 90 µm. R_{z} ist hier definiert als die gemittelte Rautiefe, also der Summe aus der Höhe der größten Profilspitze und der Tief des größten Profiltals innerhalb einer Einzelmessstrecke Iᵣ.

In einer vorteilhaften Ausführungsform des erfindungsgemäßen Verfahrens wird als Zwischenschicht eine Polyvinylbutyral-Folie mit einem Wassergehalt von größer oder gleich 0,35 Gew.-% bezogen auf die Masse der Folie verwendet, bevorzugt mit einem Wassergehalt von größer oder gleich 0,4 Gew.-% und besonders bevorzugt mit einem Wassergehalt von größer oder gleich 0,45 Gew.-%. Die Polyvinylbutyral-Folien sind insbesondere silanfrei.

Damit ist das erfindungsgemäße Verfahren dazu geeignet eine im industrielle Standard-PVB-Folie mit einem Wassergehalt von ≥0,4 Gew.-% und ohne spezielle Silan-haltige Haftverstärker zu verwenden. Derartige Folien sind besonders kostengünstig und industriell gut zu verarbeiten. Im Gegensatz zu Verfahren nach dem Stand der Technik, sind bei dem erfindungsgemäßen Verfahren keine speziellen auf das Verfahren abgestimmte Folien notwendig. Das erfindungsgemäße Verfahren ist universell einsetzbar und kann mit den angegeben Folien besonders gute Resultate erzielen.

Des Weiteren muss die Stapelfolge lediglich auf maximal 90°C bis 115°C erhitzt werden und nicht auf höhere Temperaturen, wie im Stand der Technik. Das erfindungsgemäße Walzenverfahren ist besonderes energiesparend. Das erfindungsgemäße Verfahren mit einer Kombination aus einem vergleichsweise Kühlen Vakuumverfahren und eine besonders engiesparenden Walzenverfahren benötigt insgesamt nur wenig Energie und ist besonders kostengünstig.

In einer vorteilhaften Ausführungsform wird die gesamte Herstellung der Verbundscheibe autoklavfrei durchgeführt. Das erfindungsgemäße Verfahren ist deshalb besonders energiesparend und kostengünstig.

In einer vorteilhaften Ausführungsform des erfindungsgemäßen Verfahrens, wird während der Verfahrensschritte (b2) bis (b5) kontinuierlich ein Unterdruck an den Vakuum-Ring oder den Vakuum-Sack angelegt. Bevorzugt wird ununterbrochen ein Druck p von kleiner oder gleich 0,3 bar angelegt. Dies gilt insbesondere bei Verwendung eines Vakuum-Rings. Aus technischen Gründen kann es nötig sein, dass die Unterdruckleitung kurzzeitig entfernt wird, insbesondere bei Verwendung eines Vakuum-Sacks. Der Vakuum-Ring und der Vakuum-Sack weisen Ventile auf, die bei Abkoppeln der Unterdruckleitung das Vakuum im Ring oder Sack aufrechterhalten. Ein Abkoppeln kann nötig sein, um die Stapelfolge zu transportieren, insbesondere von einer Station zur nächsten. Durch Undichtigkeiten im System Ring/Sack-Stapelfolge und durch Ausgasung aus der Stapelfolge kann sich der Druck erhöhen. Bevorzugt bleibt der Druck p auch während der Abkoppelphasen kleiner oder gleich 0,8 bar, besonders bevorzugt kleiner oder gleich 0,7 bar und insbesondere kleiner oder gleich 0,6 bar. Es hat sich gezeigt, dass ein kurzes Abkoppeln und eine kurze Druckerhöhung die Ergebnisse nicht wesentlich verschlechtert.

Ein weiterer Aspekt der Erfindung umfasst eine Vorrichtung zur Durchführung des Verfahrens, mindestens umfassend:
- eine Transporteinrichtung zum Verfahren der Stapelfolge durch die Vorrichtung entlang einer Transportrichtung,
- ein Vakuumsystem mit mindestens einem Vakuum-Ring oder mindestens einem Vakuum-Sack zum Entlüften der Stapelfolge in den Verfahrensschritten b2) und b4),
- einen ersten Heizbereich zum Erwärmen der Stapelfolge (1) in Verfahrensschritt b3),
- einen zweiten Heizbereich, der in Transportrichtung hinter dem ersten Heizbereich angeordnet ist, zum Erwärmen der Stapelfolge im Verfahrensschritt c1),
- ein Kalanderwalzensystem, das in Transportrichtung im oder hinter dem zweiten Heizbereich angeordnet ist, und eine erste Kalandereinheit mit mindestens zwei einander gegenüberliegenden Kalanderwalzen umfasst, zum Zusammenpressen der Stapelfolge im Verfahrensschritt c2),
wobei
- das Kalanderwalzensystem eine zweite Kalendereinheit zum Zusammenpressen der Stapelfolge im Verfahrensschritt c3) umfasst, die in Transportrichtung der Stapelfolge hinter der ersten Kalandereinheit angeordnet ist und die mindestens zwei einander gegenüberliegenden Kalanderwalzen aufweist, und/oder
- die Kalanderwalzen derart ausgebildet sind, dass die Stapelfolge in einem Randbereich mit einem höheren Anpressdruck zusammengepresst werden kann, als im übrigen Bereich.

Sowohl der erste Heizbereich als auch der zweite Heizbereich, können jeweils aus einem Bereich oder mehreren in Transportrichtung hintereinander angeordneten Unterheizbereichen ausgebildet sein. Es versteht sich, dass der erste Heizbereich oder die Summe der ersten Unterheizbereiche im Bereich des Vakuumsystems angeordnet ist beziehungsweise sind. Des Weiteren versteht es sich, dass der zweite Heizbereich oder die Summe der zweiten Unterheizbereiche im Bereich des Kalanderwalzensystems angeordnet ist beziehungsweise sind.

Die Heizbereiche können durch alle technisch sinnvollen Heizvorrichtungen betrieben werden, beispielsweise durch einen oder mehrere elektrisch betriebene Heizstrahler, beispielsweise aus Quarzstäben, durch andere geeignete Strahlungsquellen, wie Mikrowellenstrahlern, durch Konvektionsöfen, Umluftöfen oder durch Heißluftströme.

In einer Ausgestaltung der erfindungsgemäßen Vorrichtung umfasst das Kalanderwalzensystem eine zweite Kalandereinheit zum Zusammenpressen der Stapelfolge im Verfahrensschritt c3), wobei die die zweite Kalandereinheit in Transportrichtung der Stapelfolge hinter der ersten Kalandereinheit angeordnet ist und mindestens zwei einander gegenüberliegenden Kalanderwalzen aufweist.

In einer weiteren Ausgestaltung der erfindungsgemäßen Vorrichtung wird die Stapelfolge in einem Randbereich stärker zusammengepresst, als im übrigen Bereich. Der übrige Bereich ist der Bereich zwischen den Randbereichen. In einer weiteren erfindungsgemäßen Vorrichtung sind die Kalanderwalzen der ersten Kalandereinheit derart ausgebildet, dass die Stapelfolge in einem Randbereich mit einem höheren Anpressdruck zusammengepresst werden kann als im übrigen, mittleren Bereich. Dazu können einzelne Kalanderwalzen oder auch größere Abschnitte von Kalanderwalzen höhere Drücke auf bestimmte Bereiche der Stapelfolge ausüben, beispielsweise durch eine hydraulische Steuerung.

In einer weiteren erfindungsgemäßen Vorrichtung sind die Kalanderwalzen der zweiten Kalandereinheit derart ausgebildet, dass die Stapelfolge in einem Randbereich mit einem höheren Anpressdruck zusammengepresst werden kann als im übrigen, mittleren Bereich.

In einer weiteren erfindungsgemäßen Vorrichtung sind die Kalanderwalzen der zweiten Kalandereinheit nur in einem Bereich angeordnet, in dem der Randbereich der Stapelfolge durch die zweite Kalandereinheit geführt wird.

Es versteht sich, dass eine Vorrichtung mit erhöhtem Anpressdruck der ersten Kalandereinheit im Randbereich der Stapelfolge auch mit einer zweiten erfindungsgemäßen Kalandereinheit kombiniert werden kann.

Eine vorteilhafte Ausgestaltung der erfindungsgemäßen Vorrichtung weist mindestens eine Kühleinheit auf, bevorzugt ein Gebläse mit oder ohne Wärmetauscher. Die Kühleinheit ist in Transportrichtung zwischen dem ersten Heizbereich und dem zweiten Heizbereich angeordnet. Dies hat den besonderen Vorteil, dass die Stapelfolge im Verfahrensschritt b4) schnell auf die geforderte Temperatur abgekühlt werden kann, was zu einer Verkürzung der Prozesszeit führt.

In einer vorteilhaften Ausgestaltung der erfindungsgemäßen Vorrichtung weist die Kalanderwalze einen kreisrunden Kern auf, bevorzugt aus einem Hohlprofil, besonders bevorzugt mit Speichen oder Stützstreben, oder einem Vollprofil. Der Kern enthält bevorzugt ein Metall wie Aluminium oder Edelstahl oder besteht daraus.

Der Kern hat bevorzugt einen Durchmesser von 5 cm bis 30 cm. In einer vorteilhaften Ausgestaltung weisen die einander gegenüberliegenden Kalanderwalzen Kerne mit unterschiedlichen Durchmessern auf. So betragen die Durchmesser der relativ zur Stapelfolge auf einer Seite angeordneten Kerne von 5 cm bis 10 cm und die Durchmesser der relativ zur Stapelfolge auf der gegenüberliegenden Seite angeordneten Kerne von 12 cm bis 30 cm.

Auf der Mantelfläche des Kerns ist mindestens eine Elastomerbeschichtung angeordnet. Die Elastomerbeschichtung weist bevorzugt eine konstante Schichtdicke auf, besonders bevorzugt eine Schichtdicke von 5 mm bis 30 mm, insbesondere von 10 mm bis 25 mm.

Die Kalanderwalze hat bevorzugt eine Breite von 0,9 cm bis 20 cm, bevorzugt von 1,8 cm bis 5 cm. Die Elastomerbeschichtung ist bevorzugt auf der gesamten Breite der Kalanderwalze mantelförmig angeordnet. Die Elastomerbeschichtung kann aber auch aus zwei oder mehreren Mantelbereichen mit entsprechend kleinerer Breite sein, die ringförmig um den Kern angeordnet sind. Dies ist besonders vorteilhaft um auch auf gebogene Stapelfolgen den Anpressdruck gleichmäßig zu verteilen.

Die erfindungsgemäße Elastomerbeschichtung weist vorteilhafterweise eine Shore-A-Härte von 40 bis 90 gemäß DIN EN ISO 868 und DIN ISO 7619-1 auf. Derartige Elastomerbeschichtungen sind besonders dazu geeignet, eine gute Kraftübertragung von der Kalanderwalze zu der Oberfläche Stapelfolge zu gewährleisten ohne durch punktuelle Kraftspitzen die Scheiben der Stapelfolge zu beschädigen.

Derartige Kalanderwalzen der ersten Kalandereinheit werden bevorzugt mit einem Anpressdruck von 100 N bis 1000 N, bevorzugt von 200 N bis 950 N, auf die Oberfläche der Stapelfolge gepresst.

Derartige Kalanderwalzen der zweiten Kalandereinheit werden bevorzugt mit einem Anpressdruck von 50 N bis 1000 N, besonders bevorzugt von 100 N bis 700 N auf die Oberfläche der Stapelfolge gepresst.

Ein weiterer Aspekt der Erfindung umfasst die Verwendung des erfindungsgemäßen Verfahrens zur Herstellung einer Verbundscheibe für Fortbewegungsmittel für den Verkehr auf dem Lande, in der Luft oder zu Wasser, insbesondere in Kraftfahrzeugen Zügen, Flugzeugen oder Schiffen, beispielsweise als Windschutzscheibe, Heckscheibe, Seitenscheibe und/oder Dachscheibe, für Gebäude, insbesondere im Zugangsbereich, Fensterbereich, Dachbereich oder Fassadenbereich, als Einbauteil in Möbeln und Geräten.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: ein Flussdiagramm einer Ausführungsform des erfindungs-gemäßen Verfahrens,
- Figur 2A: eine perspektivische Darstellung eines Ausschnitts der erfindungsgemäßen Vorrichtung,
- Figur 2B: eine perspektivische Darstellung eines weiteren Ausschnitts der erfindungsgemäßen Vorrichtung und
- Figur 3: Beispiel eines Temperaturverlaufsdiagramms.

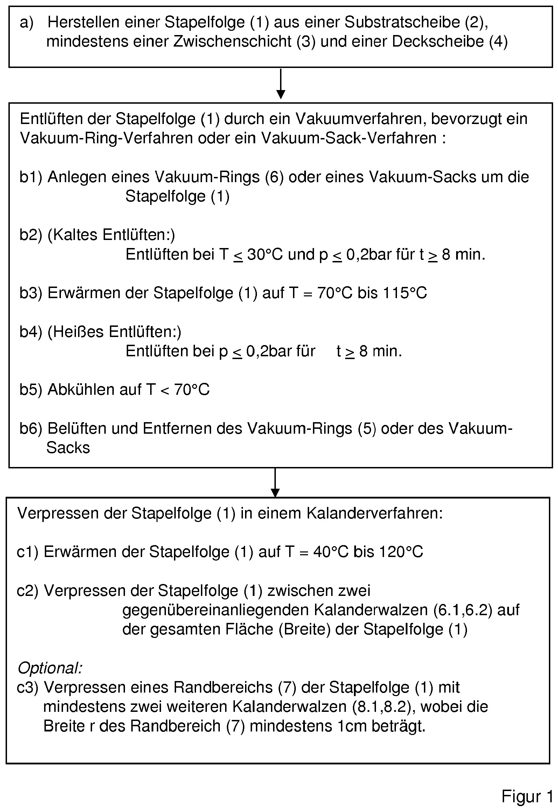

Figur 1 zeigt ein Flussdiagramm eines Ausführungsbeispiels des erfindungsgemäßen Verfahrens zur autoklavfreien Lamination einer Verbundscheibe.

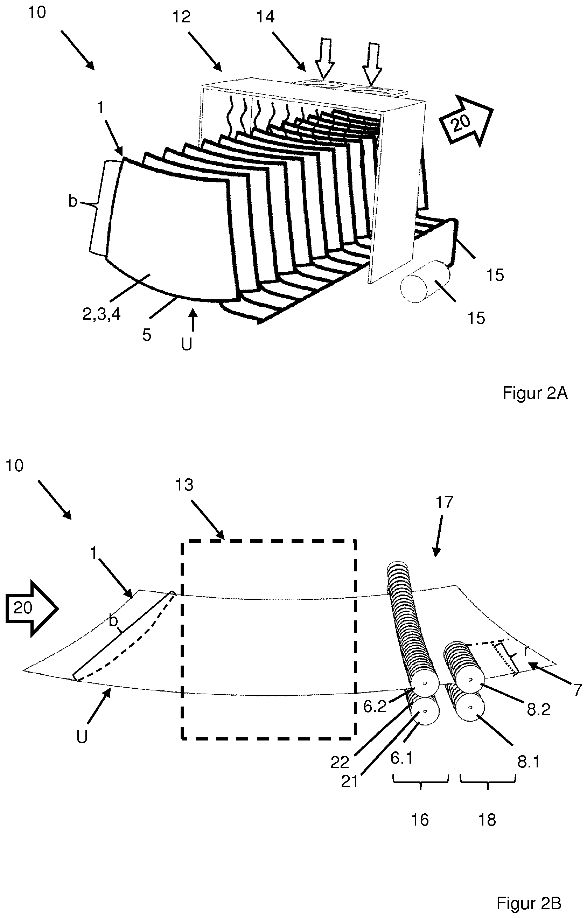

Figur 2A und Figur 2B zeigen jeweils eine perspektivische Darstellung eines Ausschnitts der erfindungsgemäßen Vorrichtung 10 zur Durchführung des erfindungsgemäßen Verfahrens. Die Teile der Vorrichtung 10 gemäß dem Ausschnitt aus Figur 2B sind in Transportrichtung 20 gesehen hinter den Teile der Vorrichtung 10 gemäß dem Ausschnitt aus Figur 2A angeordnet.

In einem ersten Schritt a) des erfindungsgemäßen Verfahrens wird eine Stapelfolge 1 aus beispielsweise einer Substratscheibe 2, einer Zwischenschicht 3 und einer Deckscheibe 4 hergestellt. Die aus der Stapelfolge 1 durch autoklavfreie Lamination herzustellende Verbundscheibe ist beispielsweise eine Windschutzscheibe eines Personenkraftwagens.

Die Substratscheibe 2 und die Deckscheibe 4 sind in diesem Beispiel jeweils annähernd trapezförmig und weisen eine leichte Wölbung auf, wie sie für moderne Windschutzscheiben üblich ist. Die Substratscheibe 2 und die Deckscheibe 4 sind in diesem Beispiel gleich groß und deckungsgleich übereinander angeordnet. Die Substratscheibe 2 und die Deckscheibe 4 haben eine Breite von beispielsweise 0,9 m und eine Länge an der Unterkante U, das heißt an der längeren Grundseite der trapezförmigen Scheiben, von beispielsweise 1,5 m. Die der Unterkante U gegenüberliegende Kante hat eine Länge von beispielsweise 1,2 m. Es versteht sich, dass bei der Lamination von Verbundscheiben von beispielsweise Seitenscheiben oder Dachscheiben, kleinere oder größere, sowie dreiecksförmig mit komplexen Ausbuchtungen oder rechteckförmige Substratscheiben 2 und Deckscheiben 4 verwendet werden können.

Die Substratscheibe 2 ist beispielsweise dafür vorgesehen, in Einbaulage dem Innenraum des Fahrzeugs zugewandt zu sein, wogegen die Deckscheibe 4 dafür vorgesehen ist bezüglich des Fahrzeuginnenraums nach außen weist. Substratscheibe 2 und Deckscheibe 4 bestehen beispielsweise aus Natron-Kalkglas. Die Dicke der Substratscheibe 2 beträgt beispielsweise 1,6 mm und die Dicke der Deckscheibe 4 beträgt 2,1 mm. Es versteht sich, dass Substratscheibe 2 und Deckscheibe 4 beispielsweise auch gleich dick ausgebildet sein können. Die Zwischenschicht 3 ist eine thermoplastische Zwischenschicht und besteht beispielsweise aus Polyvinylbutyral (PVB). Sie weist beispielsweise eine Dicke von 0,76 mm bis 0,86 mm auf.

In einem Schritt b1) des erfindungsgemäßen Verfahrens wird ein Vakuum-Ring 5 um die äußeren Seitenkanten der Stapelfolge 1 gelegt. Der Vakuum-Ring 5 ("greensnake") besteht aus einem unterdruckstabilen Schlauch, der die Form eines geschlossenen Rings hat und an seiner Innenseite einen Schlitz aufweist, in den die äußere Seitenkante der Stapelfolge 1 eingelegt ist. Der Vakuum-Ring 5 umschließt die Seitenkanten und den Zwischenraum zwischen der Substratscheibe 2 und der Deckscheibe 4 vollständig und dichtet ihn vakuumtechnisch ab. Der Vakuum-Ring 5 ist über einen Unterdruckschlauch mit einem optionalen Vakuum-Kompensationstank und einer Vakuum-Pumpe verbunden. Vakuum-Ring 5, Unterdruckschlauch, gegebenenfalls Vakuum-Kompensationstank und Vakuum-Pumpe bilden ein Vakuumsystem 15. Der Vakuum-Kompensationstank hat beispielsweise ein Volumen von 1 m³. Die Vakuum-Pumpe hat beispielsweise eine Förderkapazität von 300 m³/h und erreicht einen maximalen Enddruck von 0,1 mbar.

In der Figur 2 A sind eine Vielzahl von derartigen Stapelfolgen 1 aus jeweils einer Substratscheibe 2, einer Zwischenschicht 3 und einer Deckschicht 4 mit jeweils einem montierten Vakuum-Ring 5 dargestellt. Die Stapelfolgen sind in aufrechter Position und parallel zu einander angeordnet. Die Stapelfolgen 1 sind in eine nicht dargestellte Transportvorrichtung eingesetzt, die die Stapelfolgen 1 durch die Vorrichtung entlang der Transportrichtung 20 transportiert. Die Transportvorrichtung ist beispielsweise ein Förderband mit geeigneten Haltern zur Aufnahme der Stapelfolgen 1. Der Vakuum-Ring 5 und der Unterdruckschlauch, der den Vakuum-Ring 5 mit der Vakuum-Pumpe verbindet sind beweglich ausgebildet, so dass sie mit der Stapelfolge 1 unter Aufrechterhaltung des Unterdrucks durch die Vorrichtung 10 transportiert werden können.

In einem weiteren Schritt b2) wird die Stapelfolge 1 durch Anlegen eines Unterdrucks von beispielsweise p = 0,1 bar entlüftet. Die Druckangaben beziehen sich auf den absoluten Druck, also den Druck gegenüber dem absoluten Vakuum mit p = 0 bar. Die Entlüftung in diesem Verfahrensschritt erfolgt bei einer Temperatur T der Stapelfolge 1 zwischen 0°C und 30°C und beispielsweise der Raumtemperatur (RT) der Umgebung. Dies erfolgt über einen Zeitraum t von größer oder gleich 8 min und beispielsweise von 12 min.

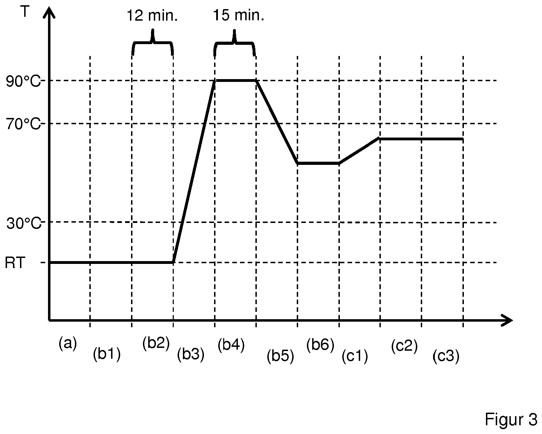

Figur 3 zeigt ein beispielhaftes Diagramm des Temperaturverlaufs während des erfindungsgemäßen Verfahrens. Die horizontale Achse ist in Verfahrensschritten unterteilt. Beide Achsen sind nicht maßstabsgetreu.

Anschließend wird in einem Schritt b3) die Stapelfolge 1 durch die Transportvorrichtung in den ersten Heizbereich 12 der Vorrichtung 10 transportiert. Der erste Heizbereich 12 ist beispielsweise ein Umluftofen, bei dem die Stapelfolge 1 durch einen Heißluftstrom erwärmt wird. Dort wird die Stapelfolge 1 auf eine Temperatur T von 70°C bis 115°C und beispielsweise auf 90°C erwärmt. Der Unterdruck von p = 0,1 bar am Vakuum-Ring wird dabei kontinuierlich aufrechterhalten. Es versteht sich, dass der Unterdruck auch nur periodisch angelegt sein kann. Dies ist insbesondere bei Verwendung eines Vakuum-Sack-Verfahrens der Fall, bei dem der Vakuum-Sack bei Transport zwischen mehreren Positionen vom Vakuum-System abgekoppelt wird.

Anschließend wird in einem Schritt b4) die Stapelfolge 1 bei der Temperatur T von beispielsweise 90°C über einen Zeitraum t von größer oder gleich 8 min und beispielsweise von 15 min entlüftet. Der Unterdruck von p = 0,1 bar am Vakuum-Ring wird dabei kontinuierlich aufrechterhalten.

Anschließend wird in einem Schritt b5) die Stapelfolge 1 auf eine Temperatur T von kleiner 70°C abgekühlt, beispielsweise auf eine Temperatur T von 50°C. Der Unterdruck von p = 0,1 bar am Vakuum-Ring wird dabei kontinuierlich aufrechterhalten. Die Abkühlung kann durch eine Kühleinheit 14, beispielsweise durch einen Luftstrom von Luft aus der Umgebung der Vorrichtung 10 mit einem Gebläse beschleunigt werden.

Das Abkühlen unter Unterdruck ist vorteilhaft, da ein Abkühlen ohne Unterdruck zu einer Bildung von Blasen und Trübungen in der späteren Verbundscheibe führt.

Anschließend wird in einem Schritt b6) die Saugwirkung am Vakuum-Ring 5 der Stapelfolge 1 abgeschaltet und ein Umgebungsdruck angelegt, wodurch der Vakuum-Ring 5 belüftet wird. Anschließend wird der Vakuum-Ring 5 von der Stapelfolge 1 entfernt.

Anschließend wird die Stapelfolge 1 in diesem Beispiel aus der vertikalen Lage in eine horizontale Lage überführt, beispielsweise durch einen Industrieroboter.

Figur 2B zeigt eine schematisch Darstellung der Stapelfolge 1, des zweiten Heizbereichs 13 und des Kalanderwalzensystems 17. Die Stapelfolge 1 ist hier horizontal liegend und in Längsrichtung angeordnet, das heißt die Unterkante U ist annäherungsweise parallel zur Transportrichtung 20 ausgerichtet.

In einem Schritt c1) wird die Stapelfolge 1 durch die Transportvorrichtung in den zweiten Heizbereich 13 der Vorrichtung 10 transportiert. Der zweite Heizbereich 13 ist beispielsweise ein Ofen, der durch mehrere elektrisch betriebene Heizstrahler aus Quarzstäben betrieben wird. Dort wird die Stapelfolge 1 auf eine Temperatur T von 40°C bis 120°C und beispielsweise auf 60°C erwärmt.

Anschließend wird die Stapelfolge 1 in das Kalandersystem 17 eingeführt. Das Kalandersystem 17 besteht aus mindestens einer ersten Kalandereinheit 16. Die erste Kalandereinheit 16 umfasst mindestens zwei einander gegenüberliegenden Kalanderwalzen 6.1,6.2. Im dargestellten Beispiel umfasst die erste Kalandereinheit 16 fünfunddreißig untere Kalanderwalzen 6.1 und fünfunddreißig obere Kalanderwalzen 6.2, die jeweils einander gegenüberliegend angeordnet sind. Die Stapelfolge 1 wird dabei zwischen den unteren Kalanderwalzen 6.1 und den oberen Kalanderwalzen 6.2 eingeführt und durch diese zusammengepresst.

Die Kalanderwalzen 6.1,6.2 haben jeweils einen Kern aus einem Vollprofil, der aus Aluminium besteht. Der Kern der unteren Kalanderwalzen 6.1 hat einen Durchmesser von beispielsweise 16 cm, der Kern der oberen Kalanderwalzen 6.2 hat einen Durchmesser von beispielsweise 9 cm. Die Mantelflächen der Kalanderwalzen 6.1,6.2 weisen jeweils eine beispielsweise 2cm dicke Elastomerbeschichtung 22 mit einer Shore-A-Härte von beispielsweise 70 auf. Die Breite der Kalanderwalzen 6.1,6.2 beträgt beispielsweise 2,6 cm. Die Kalanderwalzen 6.1,6.2 weisen auf ihrer gesamten Breite die Elastomerbeschichtung 22 auf, wobei die Elastomerbeschichtung 22 beispielsweise in der Mitte ihrer Breiten Richtung einen ringförmigen Schlitz mit einer Breite von beispielsweise 0,2 cm aufweist, so dass die Breite der Kontaktfläche der Elastomerbeschichtung 22 mit der Stapelfolge 1 zwei mal 1,2 cm beträgt.

Im dargestellten Beispiel weist jede fünfte untere Kalanderwalze 6.1 einen Antrieb auf, der die Stapelfolge 1 mit der Geschwindigkeit der Transporteinheit weiterbewegt. Es versteht sich, dass auch mehr oder weniger Kalanderwalzen 6.1 oder 6.2 und insbesondere alle Kalanderwalzen 6.1,6.2 einen Antrieb aufweisen können. Die anderen unteren Kalanderwalzen 6.1 und die oberen Kalanderwalzen 6.2 sind um ihre mittige Achse rotierbar angeordnet und drehen sich entsprechend der Bewegung der Stapelfolge 1 mit.

Vorteilhafterweise ist jede Kalanderwalze 6.1,6.2 der ersten Kalandereinheit 16 mit einem Druckluft-Zylinder verbunden, mit dem über die Kalanderwalzen 6.1,6.2 Druck auf die Stapelfolge 1 ausgeübt werden kann. Der Betriebsdruck der Druckluft-Zylinder beträgt beispielsweise von 2 bar bis 8 bar. Der Anpressdruck der Kalanderwalzen 6.1,6.2 an die Oberfläche der Stapelfolge 1 beträgt beispielsweise von 200 N bis 950 N.

Mit einer derartigen Vorrichtung konnten bereits Verbundscheiben mit ausgezeichneter Qualität, autoklavfrei und daher energiesparend und mit kurzer Prozesszeit, hergestellt werden.

In einer vorteilhaften Ausgestaltung der erfindungsgemäßen Vorrichtung die Druckluft-Zylinder einzeln oder benachbarte Einheiten aus Druckluft-Zylindern einzeln mit unterschiedlichen Drücken beaufschlagbar. Dadurch ist es möglich, beispielsweise in einem Randbereich r der Stapelfolge 1 einen höheren Anpressdruck auf die Stapelfolge 1 auszuüben als beispielsweise in benachbarten Bereichen der Stapelfolge 1. Diese Ausgestaltung hat den Vorteil einer verbesserten Qualität des Randbereichs der durch das erfindungsgemäße Verfahren hergestellten Verbundscheibe.

Das in Figur 2B dargestellte Kalandersystem 17 weist eine zweite Kalandereinheit 18 auf, die in Transportrichtung 20 hinter der ersten Kalandereinheit 16 angeordnet ist. Die zweite Kalandereinheit 18 besteht beispielsweise aus neun Kalanderwalzenpaaren 8.1,8.2 wobei eine untere Kalanderwalze 8.1 jeweils eine oberen Kalanderwalze 8.2 gegenüberliegend angeordnet ist.

Die Kalanderwalzen 8.1,8.2 sind beispielsweise den Kalanderwalzen 6.1,6.2 entsprechend aufgebaut. Das heißt, die Kalanderwalzen 8.1,8.2 haben beispielsweise jeweils einen Kern 21 aus einem Vollprofil, der aus Aluminium besteht. Der Kern 21 der unteren Kalanderwalzen 8.1 hat einen Durchmesser von beispielsweise 16 cm, der Kern der oberen Kalanderwalzen 8.2 hat einen Durchmesser von beispielsweise 9 cm. Die Mantelflächen der Kalanderwalzen 8.1,8.2 weisen jeweils eine beispielsweise 2 cm dicke Elastomerbeschichtung 22 mit einer Shore-A-Härte von beispielsweise 70 auf. Die Breite der Kalanderwalzen 8.1,8.2 beträgt beispielsweise 2,6 cm. Die Kalanderwalzen 8.1,8.2 weisen auf ihrer gesamten Breite die Elastomerbeschichtung 22 auf, wobei die Elastomerbeschichtung 22 beispielsweise in der Mitte ihrer BreitenRichtung einen ringförmigen Schlitz mit einer Breite von beispielsweise 0,2 cm aufweist, so dass die Breite der Kontaktfläche der Elastomerbeschichtung 22 mit der Stapelfolge 1 zwei mal 1,2 cm beträgt.

Vorteilhafterweise ist jede Kalanderwalze 8.1,8.2 der zweiten Kalandereinheit 18 mit einem Druckluft-Zylinder verbunden, mit dem über die Kalanderwalzen 8.1,8.2 Druck auf die Stapelfolge 1 ausgeübt werden kann. Der Betriebsdruck der Druckluft-Zylinder beträgt beispielsweise von 1 bar bis 6 bar. Der Anpressdruck der Kalanderwalzen 8.1,8.2 an die Oberfläche der Stapelfolge 1 beträgt beispielsweise von 50 N bis 700 N.

In einer vorteilhaften Ausführungsform des erfindungsgemäßen Verfahrens wird die Stapelfolge 1 nach dem Zusammenpressen durch die erste Kalandereinheit 16 auf ihrer gesamten Fläche im Verfahrensschritt c2) in einem weiteren Verfahrensschritt c3) zwischen die Kalanderwalzen 8.1,8.2 der zweiten Kalandereinheit 18 eingeführt. Die zweite Kalandereinheit 18 presst nun einen gezielten Randbereich 7 der Breite r von beispielsweise 20 cm entlang der Unterkante der Stapelfolge 1 zusammen. Der Randbereich 7 entlang der Unterkante der Stapelfolge 1 beziehungsweise der dardurch gebildeten Verbundscheibe, weist bei Verfahren nach dem Stand der Technik oftmals Trübungen und Lufteinschlüsse auf. Durch den Verfahrensschritt c3) können diese Lufteinschlüsse und Trübungen effektiv beseitig werden.

Dies war für die Erfinder unerwartet und überraschend.

Ein weiterer Aspekt der Erfindung umfasst ein Verfahren zur autoklavfreien Lamination einer Verbundscheibe, wobei
(a) eine Stapelfolge (1) aus einer Substratscheibe (2), mindestens einer Zwischenschicht (3) und einer Deckscheibe (4) hergestellt wird,
(b1) ein Vakuum-Ring (5) oder ein Vakuum-Sack um die Stapelfolge (1) gelegt wird,
(b2) die Stapelfolge (1) für eine Zeitdauer t von größer oder gleich 8 min und bei einer Temperatur T von 0°C bis 30°C durch Anlegen eines Unterdrucks p von kleiner oder gleich 0,3 bar an den Vakuum-Ring (5) oder den Vakuum-Sack entlüftet wird,
(b3) die Stapelfolge (1) bei einem Unterdrucks p von kleiner oder gleich 0,3 bar auf eine Temperatur T von 70°C bis 115°C erwärmt wird,
(b4) die Stapelfolge (1) für eine Zeitdauer t von größer oder gleich 8 min durch Anlegen eines Unterdrucks p von kleiner oder gleich 0,3 bar an den Vakuum-Ring (5) oder den Vakuum-Sack entlüftet wird,
(b5) die Stapelfolge (1) auf eine Temperatur T von kleiner 70°C abgekühlt wird,
(b6) der Vakuum-Ring (5) oder der Vakuum-Sack belüftet und entfernt wird,
(c1) die Stapelfolge (1) auf eine Temperatur T von 40°C bis 120°C erwärmt wird,
(c2) die Stapelfolge (1) zwischen mindestens zwei einander gegenüberliegenden Kalanderwalzen (6.1,6.2) einer ersten Kalandereinheit (16) über die gesamte Breite b der Stapelfolge (1) zusammengepresst wird.

Ein weiterer Aspekt der Erfindung umfasst ein Verfahren zur autoklavfreien Lamination einer Verbundscheibe, wobei
(a) eine Stapelfolge (1) aus einer Substratscheibe (2), mindestens einer Zwischenschicht (3) und einer Deckscheibe (4) hergestellt wird,
(b1) ein Vakuum-Ring (5) oder ein Vakuum-Sack um die Stapelfolge (1) gelegt wird,
(b2) die Stapelfolge (1) für eine Zeitdauer t von größer oder gleich 8 min und bei einer Temperatur T von 0°C bis 30°C durch Anlegen eines Unterdrucks p von kleiner oder gleich 0,3 bar an den Vakuum-Ring (5) oder den Vakuum-Sack entlüftet wird,
(b3) die Stapelfolge (1) bei einem Unterdrucks p von kleiner oder gleich 0,3 bar auf eine Temperatur T von 70°C bis 115°C erwärmt wird,
(b4) die Stapelfolge (1) für eine Zeitdauer t von größer oder gleich 8 min durch Anlegen eines Unterdrucks p von kleiner oder gleich 0,3 bar an den Vakuum-Ring (5) oder den Vakuum-Sack entlüftet wird,
(b5) die Stapelfolge (1) auf eine Temperatur T von kleiner 70°C abgekühlt wird,
(b6) der Vakuum-Ring (5) oder der Vakuum-Sack belüftet und entfernt wird,
(c1) die Stapelfolge (1) auf eine Temperatur T von 40°C bis 120°C erwärmt wird,
(c2) die Stapelfolge (1) zwischen mindestens zwei einander gegenüberliegenden Kalanderwalzen (6.1,6.2) einer ersten Kalandereinheit (16) über die gesamte Breite b der Stapelfolge (1) zusammengepresst wird und die Kalanderwalzen (6.1,6.2) der ersten Kalandereinheit (16) die Stapelfolge (1) in einem Randbereich (7) mit einem höheren Anpressdruck zusammenpressen als im übrigen Bereich.

Ein weiterer Aspekt der Erfindung umfasst ein Verfahren zur autoklavfreien Lamination einer Verbundscheibe, wobei
(a) eine Stapelfolge (1) aus einer Substratscheibe (2), mindestens einer Zwischenschicht (3) und einer Deckscheibe (4) hergestellt wird,
(b1) ein Vakuum-Ring (5) oder ein Vakuum-Sack um die Stapelfolge (1) gelegt wird,
(b2) die Stapelfolge (1) für eine Zeitdauer t von größer oder gleich 8 min und bei einer Temperatur T von 0°C bis 30°C durch Anlegen eines Unterdrucks p von kleiner oder gleich 0,3 bar an den Vakuum-Ring (5) oder den Vakuum-Sack entlüftet wird,
(b3) die Stapelfolge (1) bei einem Unterdrucks p von kleiner oder gleich 0,3 bar auf eine Temperatur T von 70°C bis 115°C erwärmt wird,
(b4) die Stapelfolge (1) für eine Zeitdauer t von größer oder gleich 8 min durch Anlegen eines Unterdrucks p von kleiner oder gleich 0,3 bar an den Vakuum-Ring (5) oder den Vakuum-Sack entlüftet wird,
(b5) die Stapelfolge (1) auf eine Temperatur T von kleiner 70°C abgekühlt wird,
(b6) der Vakuum-Ring (5) oder der Vakuum-Sack belüftet und entfernt wird,
(c1) die Stapelfolge (1) auf eine Temperatur T von 40°C bis 120°C erwärmt wird,
(c2) die Stapelfolge (1) zwischen mindestens zwei einander gegenüberliegenden Kalanderwalzen (6.1,6.2) einer ersten Kalandereinheit (16) über die gesamte Breite b der Stapelfolge (1) zusammengepresst wird und
(c3) ein Randbereich (7) der Stapelfolge (1) zwischen mindestens zwei weiteren einander gegenüberliegenden Kalanderwalzen (8.1,8.2) einer zweiten Kalandereinheit (18) zusammengepresst wird.

### Bezugszeichenliste:

- 1: Stapelfolge
- 2: Substratscheibe
- 3: Zwischenschicht
- 4: Deckscheibe
- 5: Vakuum-Ring
- 6.1,6.2: Kalanderwalze
- 7: Randbereich
- 8.1,8.2: Kalanderwalze
- 10: Vorrichtung
- 12: erster Heizbereich
- 13: zweiter Heizbereich
- 14: Kühleinheit
- 15: Vakuumsystem
- 16: erste Kalandereinheit
- 17: Kalanderwalzensystem
- 18: zweite Kalandereinheit
- 20: Transportrichtung
- 21: Kern
- 22: Elastomerbeschichtung
- b: Breite der Stapelfolge 1
- r: Breite des Randbereichs 7
- U: Unterkante der Stapelfolge 1

## Patentansprüche

1. Verfahren zur autoklavfreien Lamination einer Verbundscheibe, wobei
(a) eine Stapelfolge (1) aus einer Substratscheibe (2), mindestens einer Zwischenschicht (3) und einer Deckscheibe (4) hergestellt wird,
(b1) ein Vakuum-Ring (5) oder ein Vakuum-Sack um die Stapelfolge (1) gelegt wird,
(b2) die Stapelfolge (1) für eine Zeitdauer t von größer oder gleich 8 min und bei einer Temperatur T von 0°C bis 30°C durch Anlegen eines Unterdrucks p von kleiner oder gleich 0,3 bar an den Vakuum-Ring (5) oder den Vakuum-Sack entlüftet wird,
(b3) die Stapelfolge (1) bei einem Unterdruck p von kleiner oder gleich 0,3 bar auf eine Temperatur T von 70°C bis 115°C erwärmt wird,
(b4) die Stapelfolge (1) für eine Zeitdauer t von größer oder gleich 8 min durch Anlegen eines Unterdrucks p von kleiner oder gleich 0,3 bar an den Vakuum-Ring (5) oder den Vakuum-Sack entlüftet wird,
(b5) die Stapelfolge (1) auf eine Temperatur T von kleiner 70°C abgekühlt wird,
(b6) der Vakuum-Ring (5) oder der Vakuum-Sack belüftet und entfernt wird,
(c1) die Stapelfolge (1) auf eine Temperatur T von 40°C bis 120°C erwärmt wird,
(c2) die Stapelfolge (1) zwischen mindestens zwei einander gegenüberliegenden Kalanderwalzen (6.1,6.2) einer ersten Kalandereinheit (16) über die gesamte Breite b der Stapelfolge (1) zusammengepresst wird,
wobei
- die Kalanderwalzen (6.1,6.2) der ersten Kalandereinheit (16) die Stapelfolge (1) im Randbereich (7) mit einem höheren Anpressdruck zusammenpressen als im übrigen Bereich und/oder
- in einem anschließenden Verfahrensschritt (c3) ein Randbereich (7) der Stapelfolge (1) zwischen mindestens zwei weiteren einander gegenüberliegenden Kalanderwalzen (8.1,8.2) einer zweiten Kalandereinheit (18) zusammengepresst wird.

2. Verfahren nach Anspruch 1, wobei der Randbereich (7) eine Breite r von mindestens 1 cm und bevorzugt von 2 cm bis 30% der Breite b der Stapelfolge (1) aufweist.

3. Verfahren nach Anspruch 1 oder Anspruch 2, wobei als Zwischenschicht (3) eine Polyvinylbutyral-Folie mit einem Wassergehalt von größer oder gleich 0,35 Gew.%, bevorzugt größer oder gleich 0,4 Gew.-%, bezogen auf die Masse der Folie und/oder eine silanfreie Polyvinylbutyral-Folie verwendet wird.

4. Verfahren nach einem der Ansprüche 1 bis 3, wobei als Zwischenschicht (3) mindestens eine Folie aus Polyvinylbutyral (PVB), bevorzugt mindestens drei übereinander angeordnete Folien aus Polvyinylbutyral mit alternierender unterschiedlicher Plastizität oder Elastizität, verwendet wird.

5. Verfahren nach einem der Ansprüche 1 bis 4, wobei für die Substratscheibe (2) und/oder die Deckscheibe (4) Glas, bevorzugt Flachglas, besonders bevorzugt Floatglas, insbesondere Kalk-Natron-Glas, Quarzglas oder Borosilikatglas, oder Polymere, bevorzugt Polyethylen, Polypropylen, Polycarbonat, Polymethylmethacrylat und/oder Gemische davon verwendet werden.

6. Verfahren nach einem der Ansprüche 1 bis 5, wobei der Anpressdruck der Kalanderwalzen (6.1,6.2) der ersten Kalandereinheit (16) an die Oberfläche der Stapelfolge (1) von 100 N bis 1000 N und bevorzugt von 200 N bis 950 N beträgt und/oder wobei der Anpressdruck der Kalanderwalzen (8.1,8.2) der zweiten Kalandereinheit (18) an die Oberfläche der Stapelfolge (1) von 50 N bis 1000 N und bevorzugt von 100 N bis 700 N beträgt.

7. Verfahren nach einem der Ansprüche 1 bis 6, wobei die gesamte Herstellung der Verbundscheibe autoklavfrei durchgeführt wird.

8. Vorrichtung (10) zur Durchführung des Verfahrens nach einem der Ansprüche 1 bis 7, mindestens umfassend:
- eine Transporteinrichtung zum Verfahren der Stapelfolge (1) durch die Vorrichtung (10) entlang einer Transportrichtung (20),
- ein Vakuumsystem (15) mit mindestens einem Vakuum-Ring (5) oder mindestens einem Vakuum-Sack zum Entlüften der Stapelfolge (1) in den Verfahrensschritten b2) und b4),
- einen ersten Heizbereich (12) zum Erwärmen der Stapelfolge (1) in Verfahrensschritt b3),
- einen zweiten Heizbereich (13), der in Transportrichtung (20) hinter dem ersten Heizbereich (12) angeordnet ist, zum Erwärmen der Stapelfolge (1) in Verfahrensschritt c1),
- einem Kalanderwalzensystem (17), das in Transportrichtung (20) im oder hinter dem zweiten Heizbereich (13) angeordnet ist, und eine erste Kalandereinheit (16) zum Zusammenpressen der Stapelfolge (1) im Verfahrensschritt c2) mit mindestens zwei einander gegenüberliegenden Kalanderwalzen (6.1,6.2) umfasst,
wobei
- das Kalanderwalzensystem (17) eine zweite Kalandereinheit (18) zum Zusammenpressen der Stapelfolge (1) im Verfahrensschritt c3) umfasst, die in Transportrichtung (20) der Stapelfolge (1) hinter der ersten Kalandereinheit (16) angeordnet ist und die mindestens zwei einander gegenüberliegenden Kalanderwalzen (8.1,8.2) aufweist, und/oder
- die Kalanderwalzen (6.1,6.2, 8.1,8.2) derart ausgebildet sind, dass die Stapelfolge (1) in einem Randbereich (7) mit einem höheren Anpressdruck zusammengepresst werden kann, als im übrigen Bereich.

9. Vorrichtung (10) nach Anspruch 8, wobei eine Kühleinheit (14), bevorzugt ein Gebläse, in Transportrichtung (20) zwischen dem ersten Heizbereich (12) und dem zweiten Heizbereich (13) angeordnet ist, zum Abkühlen der Stapelfolge (1) im Verfahrensschritt b4).

10. Vorrichtung (10) nach Anspruch 8 oder Anspruch 9, wobei die Kalanderwalze (6.1,6.2,8.1,8.2,) einen kreisrunden Kern (21), bevorzugt aus einem Hohlprofil oder einem Vollprofil und bevorzugt aus einem Metall und insbesondere aus Aluminium oder Edelstahl, aufweist und auf einer Mantelfläche des Kerns (21) eine Elastomerbeschichtung (22) angeordnet ist.

11. Vorrichtung (10) nach Anspruch 10, wobei der Kern (21) der Kalanderwalzen (6.1,6.2,8.1,8.2) einen Durchmesser von 5 cm bis 30 cm und eine Breite von 0,9 cm bis 20 cm aufweist.

12. Vorrichtung (10) nach Anspruch 10 oder Anspruch 11, wobei die Elastomerbeschichtung (22) eine Schichtdicke von 5 mm bis 30 mm und bevorzugt von 10 mm bis 25 mm aufweist.

13. Vorrichtung (10) nach einem der Ansprüche 10 bis 12, wobei die Elastomerbeschichtung (22) eine Shore-A-Härte von 40 bis 90 gemäß DIN EN ISO 868 und DIN ISO 7619-1 aufweist.

## Claims

1. Method for autoclave-free lamination of a composite pane, wherein
(a) a stack sequence (1) of a substrate pane (2), at least one intermediate layer (3), and a cover pane (4) is produced,
(b1) a vacuum ring (5) or a vacuum bag is placed around the stack sequence (1),
(b2) the stack sequence (1) is deaerated for a period t greater than or equal to 8 min and at a temperature T from 0 °C to 30 °C by application of a negative pressure p less than or equal to 0.3 bar to the vacuum ring (5) or the vacuum bag,
(b3) the stack sequence (1) is heated at a negative pressure p less than or equal to 0.3 bar to a temperature T from 70 °C to 115 °C,
(b4) the stack sequence (1) is deaerated for a period t greater than or equal to 8 min by application of a negative pressure p less than or equal to 0.3 bar to the vacuum ring (5) or the vacuum bag,
(b5) the stack sequence (1) is cooled to a temperature T of less than 70 °C,
(b6) the vacuum ring (5) or the vacuum bag is aerated and is removed,
(c1) the stack sequence (1) is heated to a temperature T of 40 °C to 120 °C,
(c2) the stack sequence (1) is pressed together between at least two opposing calender rollers (6.1,6.2) of a first calender unit (16) over the entire width b of the stack sequence (1),
wherein
- the calender rollers (6.1,6.2) of the first calender unit (16) press the stack sequence (1) together in the edge region (7) with a higher contact pressure than in the remaining region, and/or
- in a subsequent process step (c3), an edge region (7) of the stack sequence (1) is pressed together between at least two additional opposing calender rollers (8.1,8.2) of a second calender unit (18).

2. Method according to claim 1, wherein the edge region (7) has a width r of at least 1 cm and preferably from 2 cm to 30% of the width b of the stack sequence (1).

3. Method according to claim 1 or claim 2, wherein a polyvinyl butyral film with a water content greater than or equal to 0.35 wt.-%, preferably greater than or equal to 0.4 wt.-%, based on the weight of the film, and/or a silane-free polyvinyl butyral film is used as the intermediate layer (3).

4. Method according to one of claims 1 through 3, wherein at least one film made of polyvinyl butyral (PVB), preferably at least three films made of polyvinyl butyral with alternatingly different plasticity or elasticity arranged one above another is used as the intermediate layer (3).

5. Method according to one of claims 1 through 4, wherein glass, preferably flat glass, particularly preferably float glass, in particular soda lime glass, quartz glass, or borosilicate glass, or polymers, preferably polyethylene, polypropylene, polycarbonate, polymethyl methacrylate, and/or mixtures thereof are used for the substrate pane (2) and/or the cover pane (4).

6. Method according to one of claims 1 through 5, wherein the contact pressure of the calender rollers (6.1,6.2) of the first calender unit (16) on the surface of the stack sequence (1) is from 100 N to 1000 N and preferably from 200 N to 950 N and/or wherein the contact pressure of the calender rollers (8.1,8.2) of the second calender unit (18) on the surface of the stack sequence (1) is from 50 N to 1000 N and preferably from 100 N to 700 N.

7. Method according to one of claims 1 through 6, wherein the entire production of the composite pane is carried out with no autoclave.

8. Device (10) for carrying out the method according to one of claims 1 through 7, at least comprising:
- a transport apparatus for moving the stack sequence (1) through the device (10) along a transport direction (20),
- a vacuum system (15) with at least one vacuum ring (5) or at least one vacuum bag for deaerating the stack sequence (1) in the process steps b2) and b4),
- a first heating region (12) for heating the stack sequence (1) in process step b3),
- a second heating region (13) that is arranged after the first heating region (12) in the transport direction (20) for heating the stack sequence (1) in process step c1),
- a calender roller system (17) that is arranged in or after the second heating region (13) in the transport direction (20), and includes a first calender unit (16) for pressing the stack sequence (1) together in process step c2) with at least two opposing calender rollers (6.1,6.2).
wherein
- the calender roller system (17) includes a second calender unit (18) for pressing the stack sequence (1) together in process step c3) that is arranged after the first calender unit (16) in the transport direction (20) of the stack sequence (1) and which has at least two opposing calender rollers (8.1,8.2), and/or
- the calender rollers (6.1,6.2, 8.1,8.2) are implemented such that the stack sequence (1) can be pressed together with a higher contact pressure in an edge region (7) than in the remaining region.

9. Device (10) according to claim 8, wherein a cooling unit (14), preferably a blower, is arranged between the first heating region (12) and the second heating region (13) in the transport direction (20), for cooling the stack sequence (1) in process step b4).

10. Device (10) according to claim 8 or claim 9, wherein the calender roller (6.1,6.2,8.1,8.2,) has a circular core (21), preferably made of a hollow profile or a solid profile and preferably made of a metal and in particular made of aluminum or stainless steel, and an elastomer coating (22) is arranged on a roller shell of the core (21).

11. Device (10) according to claim 10, wherein the core (21) of the calender rollers (6.1,6.2,8.1,8.2) has a diameter of 5 cm to 30 cm and a width of 0.9 cm to 20 cm.

12. Device (10) according to claim 10 or claim 11, wherein the elastomer coating (22) has a layer thickness of 5 mm to 30 mm and preferably of 10 mm to 25 mm.

13. Device (10) according to one of claims 10 through 12, wherein the elastomer coating (22) has a Shore A hardness of 40 to 90 per DIN EN ISO 868 and DIN ISO 7619-1.

## Revendications

1. - Procédé de stratification sans autoclave d'une plaque composite, dans lequel
(a) une séquence d'empilement (1) est produite à partir d'une plaque de substrat (2), d'au moins une couche intermédiaire (3) et d'une plaque de couverture (4) ;
(b1) un anneau à vide (5) ou un sac à vide est placé autour de la séquence d'empilement (1) ;
(b2) la séquence d'empilement (1) est désaérée pendant un laps de temps t supérieur ou égal à 8 min. et à une température T de 0°C à 30°C par application d'une dépression p inférieure ou égale à 0,3 bar à l'anneau à vide (5) ou au sac à vide ;
(b3) la séquence d'empilement (1) est chauffée à une température T de 70°C à 115°C sous une dépression p inférieure ou égale à 0,3 bar ;
(b4) la séquence d'empilement (1) est désaérée pendant un laps de temps t supérieur ou égal à 8 min. par application d'une dépression p inférieure ou égale à 0,3 bar à l'anneau à vide (5) ou au sac à vide ;
(b5) la séquence d'empilement (1) est refroidie à une température T inférieure à 70°C ;
(b6) l'anneau à vide (5) ou le sac à vide est aéré et retiré ;
(c1) la séquence d'empilement (1) est chauffée à une température T de 40°C à 120°C ;
(c2) la séquence d'empilement (1) est pressée entre au moins deux rouleaux de calandrage (6.1, 6.2) opposés l'un à l'autre d'une première unité de calandrage (16) sur toute la largeur b de la séquence d'empilement (1),
où
- les rouleaux de calandrage (6.1, 6.2) de la première unité de calandrage (16) pressent la séquence d'empilement (1) dans la zone de bordure (7) avec une pression de contact plus élevée que dans la zone restante et/ou
- dans une étape de procédé ultérieure (c3), une zone de bordure (7) de la séquence d'empilement (1) est pressée entre au moins deux autres rouleaux de calandrage (8.1, 8.2) opposés l'un à l'autre d'une seconde unité de calandrage (18).

2. - Procédé selon la revendication 1, dans lequel la zone de bordure (7) présente une largeur r d'au moins 1 cm et de préférence de 2 cm à 30% de la largeur b de la séquence d'empilement (1).

3. - Procédé selon la revendication 1 ou la revendication 2, dans lequel on utilise, comme couche intermédiaire (3), une feuille de polyvinylbutyral ayant une teneur en eau supérieure ou égale à 0,35 % en poids, de préférence supérieure ou égale à 0,4 % en poids, par rapport à la masse de la feuille et/ou une feuille de polyvinylbutyral exempt de silane.

4. - Procédé selon l'une des revendications 1 à 3, dans lequel on utilise, comme couche intermédiaire (3), au moins une feuille de polyvinylbutyral (PVB), de préférence au moins trois feuilles superposées de polyvinylbutyral ayant des plasticité ou élasticité différentes en alternance.

5. - Procédé selon l'une des revendications 1 à 4, dans lequel on utilise, pour la plaque de substrat (2) et/ou la plaque de couverture (4), du verre, de préférence du verre plat, de manière particulièrement préférée du verre flotté, en particulier du verre sodo-calcique, du verre de quartz ou du verre de borosilicate, ou des polymères, de préférence du polyéthylène, du polypropylène, du polycarbonate, du poly(méthacrylate de méthyle) et/ou des mélanges de ceux-ci.

6. - Procédé selon l'une des revendications 1 à 5, dans lequel la pression de contact des rouleaux de calandrage (6.1, 6.2) de la première unité de calandrage (16) sur la surface de la séquence d'empilement (1) s'élève à 100 N à 1000 N et, de préférence, à 200 N à 950 N, et/ou dans lequel la pression de contact des rouleaux de calandrage (8.1, 8.2) de la seconde unité de calandrage (18) sur la surface de la séquence d'empilement (1) s'élève à 50 N à 1000 N et, de préférence, à 100 N à 700 N.

7. - Procédé selon l'une des revendications 1 à 6, dans lequel la totalité de la fabrication de la plaque composite est réalisée sans autoclave.

8. - Dispositif (10) pour la mise en œuvre du procédé selon l'une des revendications 1 à 7, comprenant au moins :
- un dispositif de transport pour faire passer la séquence d'empilement (1) à travers le dispositif (10) le long d'une direction de transport (20) ;
- un système de vide (15) ayant au moins un anneau à vide (5) ou au moins un sac à vide pour la désaération de la séquence d'empilement (1) dans les étapes de procédé (b2) et (b4) ;
- une première zone de chauffage (12) pour le chauffage de la séquence d'empilement (1) dans l'étape de procédé (b3) ;
- une seconde zone de chauffage (13), qui est disposée derrière la première zone de chauffage (12) dans la direction de transport (20), pour le chauffage de la séquence d'empilement (1) dans l'étape de procédé (c1) ;
- un système de rouleaux de calandrage (17), qui est disposé dans la direction de transport (20) dans ou derrière la seconde zone de chauffage (13), et comporte une première unité de calandrage (16) pour le pressage de la séquence d'empilement (1) dans l'étape de procédé (c2) avec au moins deux rouleaux de calandrage (6.1, 6.2) opposés l'un à l'autre,
où
- le système de rouleaux de calandrage (17) comporte une seconde unité de calandrage (18) pour le pressage de la séquence d'empilement (1) dans l'étape de procédé (c3), qui est disposée derrière la première unité de calandrage (16) dans la direction de transport (20) de la séquence d'empilement (1) et qui présente au moins deux rouleaux de calandrage (8.1, 8.2) opposés l'un à l'autre, et/ou
- les rouleaux de calandrage (6.1, 6.2, 8.1, 8.2) sont conçus de telle sorte que la séquence d'empilement (1) peut être pressée dans une zone de bordure (7) avec une pression de contact plus élevée que dans la zone restante.

9. - Dispositif (10) selon la revendication 8, dans lequel une unité de refroidissement (14), de préférence une soufflante, est disposée dans la direction de transport (20) entre la première zone de chauffage (12) et la seconde zone de chauffage (13), pour le refroidissement de la séquence d'empilement (1) dans l'étape de procédé (b4).

10. - Dispositif (10) selon la revendication 8 ou la revendication 9, dans lequel le rouleau de calandrage (6.1, 6.2, 8.1, 8.2,) présente un noyau circulaire (21), de préférence en un profilé creux ou un profilé plein et, de préférence, en un métal et, en particulier, en aluminium ou en acier inoxydable, et un revêtement en élastomère (22) est disposé sur une surface d'enveloppe du noyau (21).

11. - Dispositif (10) selon la revendication 10, dans lequel le noyau (21) des rouleaux de calandrage (6.1, 6.2, 8.1, 8.2) présente un diamètre de 5 cm à 30 cm et une largeur de 0,9 cm à 20 cm.

12. - Dispositif (10) selon la revendication 10 ou la revendication 11, dans lequel le revêtement en élastomère (22) présente une épaisseur de couche de 5 mm à 30 mm et, de préférence, de 10 mm à 25 mm.

13. - Dispositif (10) selon l'une des revendications 10 à 12, dans lequel le revêtement en élastomère (22) présente une dureté Shore A de 40 à 90 selon DIN EN ISO 868 et DIN ISO 7619-1.
